# EUROPEAN PATENT SPECIFICATION

(11) **EP 3 713 074 B1**
(45) Date of publication and mention of the grant of the patent: **08.09.2021**
(21) Application number: 19164360.0
(22) Date of filing: 21.03.2019
(51) Int. Cl.: H02M 7/483, H02M 1/32

(54) **CONVERTER CELL FOR A VOLTAGE SOURCE CONVERTER**
UMRICHTERZELLE FÜR EINEN SPANNUNGSQUELLENWANDLER
CELLULE DE CONVERSION POUR UN CONVERTISSEUR DE SOURCE DE TENSION

(43) Date of publication of application: 23.09.2020
(73) Proprietor: General Electric Technology GmbH, 5400 Baden (CH)
(72) Inventor: Chivite Zabalza, Francisco Javier, Stafford, Staffordshire ST16 1WS (GB); Outram, John, Stafford, Staffordshire ST16 1WS (GB)
(74) Representative: Brevalex

(56) References cited:
- EP-A1- 2 369 725
- EP-A1- 3 001 552
- GB-A- 2 542 789
- SE-C2- 540 483

## Description

This application relates to methods and apparatus for voltage control of components, and especially for voltage control of an energy storage element of a cell of a chain-link circuit of a voltage source converter (VSC), in particular a VSC for use in high voltage power transmission.

High-voltage direct current (HVDC) electrical power transmission uses direct current for the transmission of electrical power. This is an alternative to alternating current electrical power transmission which is more common. There are a number of benefits to using HVDC electrical power transmission.

In order to use HVDC electrical power transmission, it is typically necessary to convert alternating current (AC) electrical power to direct current (DC) and back again. Recent developments in the power electronics field have led to an increased use of voltage-source converters (VSCs) for AC to DC and DC to AC conversion. VSCs make use of semiconductor switching elements that can be controllably turned on and off. Insulated gate bipolar transistors (IGBTs) connected with respective anti-parallel diodes have commonly been used as the semiconductor switching elements.

Typically a VSC will comprise a phase limb for each electrical phase of the AC network. Each phase limb may be coupled to the DC network at respective first and second DC terminals, e.g. between positive and negative DC busbars, and will also be connected to the AC network via at least one AC node. A phase limb will comprise a plurality of converter arms, with each converter arm extending between an AC node and one of the DC terminals or some other defined DC voltage such as ground. In a symmetric monopole arrangement a phase limb may have two converter arms, a positive converter arm extending between the AC node and the positive DC terminal and a negative converter arm extending between the AC node and the negative DC terminal. In other arrangements, for instance a bipole scheme, there may be more converter arms, for instance there may be two converter arms in series between the positive DC terminal and a ground terminal to form a positive pole, with an AC node at the midpoint of the series connection. Likewise a negative pole is formed by a similar arrangement connected between the ground terminal and the negative DC terminal. In each case, each converter arm includes a switching apparatus, referred to as a valve.

Various designs of VSC are known. One such variant is the modular multilevel converter (MMC). The valves of an MMC may be formed, at least partly, from a series connection of a plurality of modular units or cells, each cell having an energy storage element, such as a capacitor, and switching elements, such as IGBTs, arranged such that the energy storage element can be selectively connected in series between terminals of the cell or bypassed. The series connection of such cells is sometimes referred to as a chain-link circuit or chain-link converter and the individual cells or links are often referred to as sub-modules, with a plurality of cells together forming a module. Such chain-link circuits can be used for voltage wave-shaping and can allow conversion between AC and DC with relatively low distortion. Such chain-link circuits may also be used in other VSC variants. VSCs may also be used in flexible AC transmissions systems (FACTS), for instance as a static synchronous compensator (STATCOM).

The cells of the chain-link circuit may, depending on the type of VSC, be implemented with the switching elements arranged with the energy storage element in a half-bridge type configuration, so the energy storage element may be connected in series between the cell terminals in one orientation or may be bypassed. However, for some VSC designs at least some of the cells of the chain-link circuit may be implemented with the switching elements arranged with the energy storage element in a full-bridge type configuration, so the energy storage element may be bypassed or may be connected in series between the cell terminals in either of two reverse orientations so as to present voltages of opposite polarity at the cell terminals.

In normal operation, the voltage level of the energy storage element is maintained at a desired safe operating level. In some instances, however, for instance in some fault conditions, a situation may arise that could lead to an over-voltage of the energy storage element.

In some instances it may thus be necessary to discharge the energy storage element, e.g. capacitor, of a cell of chain-link circuit of a VSC. It has been proposed that a discharge module having an IGBT in series with a resistor is connected in parallel with the capacitor. If necessary the IGBT of the discharge module can be turned-on to provide a short circuit path between the plates of the capacitor via the discharge resistor. Additionally or alternatively, in some fault conditions, it may be desirable for the cell of the chain-link circuit to remain connected in series in the chain-link circuit so as to provide a voltage to oppose a fault current. In such a case however the current that does flow could charge the energy storage to unsafe levels. A discharge circuit such as described may divert the current away from energy storage element to prevent such charging to an unsafe over-voltage.

Whilst such a discharge arrangement can operate satisfactorily, this does require an additional dedicated IGBT for the discharge module.

Other designs of VSC are also known from the following documents: GB 2542789 A, EP 2369725 A1, EP 3001552 A1 and SE 540483 C2.

Embodiments of the present disclosure relate to improved discharge apparatus and methods.

Thus according to one aspect of the present disclosure there is provided a cell for a voltage source converter according to claim 1.

In embodiments of the present disclosure a discharge module is connected in series between the cell terminals. In use, in response to a fault condition, the first element of the discharge module may become conductive, so that the discharge module provides a conductive path for conduction from the first cell terminal to the second cell terminal. The controller also controls the cell to be switched to the first switch state, i.e. an active state. with the positive and negative terminals of the energy storage device connected to the first and second cell terminals respectively. The discharge module thus electrically connects the first and second cell terminals to provide a path for that can allow for discharge of the energy storage element or divert a valve current that would result in charging of the energy storage element away from the valve element, so as to prevent over-charging. The first element is line-commutated switching element, e.g. an element that, once operating in the conductive state, may continue to conduct as long there is a sufficient voltage/current flowing through the discharge module, i.e. the first element is not a semiconductor switch element such an IGBT that can be controllably turned-off independently of the current/voltage through the discharge module.

To shut-down conduction via the discharge module the controller is operable to switch the first and second switches to the second switch state. The controller may be configured to maintain the first and second switches in the second switch state for at least a predetermined minimum duration to shut-down conduction via the discharge module before switching back to the first switch state. In some embodiments the controller may be configured to implement a controlled shut-down delay between receipt of a discharge module shut-down signal and initiating switching to the second switch state, wherein the controlled delay is configured to be different to a shut-down delay applied by another cell.

In some embodiments the first element, i.e. the line-commutated switching element, may comprises a selectively triggerable switching element that can be selectively triggered to transition from the non-conductive state to the conductive state. In such embodiments, the controller may be configured to trigger the first element to transition to the conductive state in response to said fault condition.

In some embodiments the first element may comprise a thyristor, which may be controllably triggerable thyristor which may be triggered by a suitable thyristor firing signal. In some embodiments the first element may comprise a surge protection device, which may, in some examples, be a triggerable surge protective device.

In some embodiments however the first discharge element may be an element that will automatically become conductive if a voltage difference above a certain level is developed across the first discharge element. For example a semiconductor device such as a diode or thyristor which has a break-over voltage such that the element become conductive if a voltage above a defined threshold is applied across its terminals.

The use of a line-commutated switching element such a thyristor allows for a simpler and less expensive discharge module than would be the case if a semiconductor switch such as an IGBT were used.

In some embodiments the discharge module includes a resistive element in series with the first element. The resistive element may be a resistor, but in some embodiments the resistive element may be at least one of a surge arrestor and a varistor configured to substantially allow conduction above a let-through voltage level and substantially block conduction below a let-through voltage level. The resistive element may comprise a metal oxide varistor.

Another aspect relates to a chain-link circuit comprising a plurality of such cells in series. In some embodiments a chain-link controller may be configured to control operation of the cells. The chain-link controller may be configured such that, if the discharge modules of a plurality of cells are all activated, the chain-link controller controls the cells so as to stagger the times at which different cells switch to the second switch state so as to shut-down conduction via the discharge module.

Another aspect relates to a voltage source converter comprising such a cell or such a chain-link circuit.

Another aspect relates to a method of controlling voltage of a cell of a voltage source converter according to claim 15.

Additional features and embodiments will be set out in the description below.

To better illustrate the features and advantages of aspects of the present disclosure, various embodiments will now be described by way of example only, with reference to the accompanying drawings, of which:
Figure 1 illustrates a conventional cell of a voltage source converter;
Figure 2 one example of a cell having a discharge module with a thyristor according to an embodiment;
Figure 3 illustrates the principles of controlled shut down of the thyristor;
Figure 4 an example of a VSC having cells according to an embodiment;
Figure 5 illustrates another example of a discharge module;
Figure 6 illustrates a further example of a discharge module; and
Figure 7 illustrates an example of a series connection of some cells.

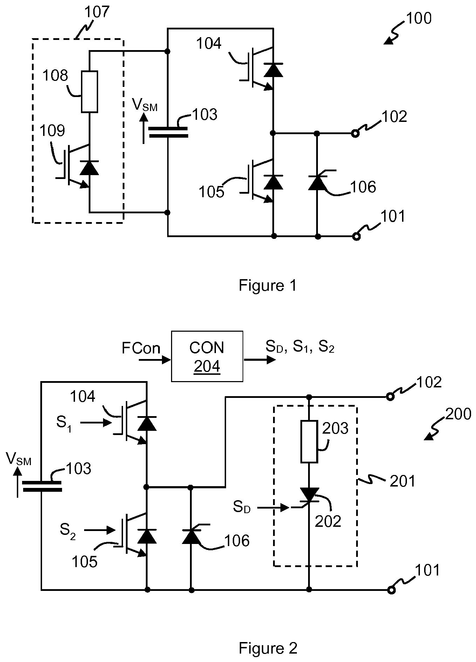

Figure 1 illustrates one example of a conventional cell 100 for use as part of a chain-link circuit of a voltage source converter (VSC) such as a Modular Multilevel Converter (MMC) for example. The cell, sometimes known as a sub-module, has first and second cell terminals 101 and 102 for connecting the cell in series with other cells as part of the chain-link circuit. The cell comprises an energy storage element, which in this example is a capacitor 103, and first and second switches 104 and 105. The first and second switches 104 and 105 are semiconductor switches that can be controllably turned-on and turned-off, i.e. can be turned-on and also turned-off independently of the line voltage across the switch, such as IGBTs (insulated gate bipolar transistors) with anti-parallel diodes. The cell 100 illustrated in in figure 1 is arranged in a half-bridge configuration with the switches 104 and 105 arranged so as to allow the cell to be selectively switched to either of first and second switch states. In the first switch state, the first switch 104 is turned-on, i.e. conducting, and the second switch 105 is turned-off, i.e. non-conducting, so as to electrically connect the capacitor 103 in series between the cell terminals 101 and 102. In use the capacitor 103 is charged to a voltage V_{SM} and thus in this first switch state, which may be referred to as an active state, the voltage V_{SM} of the capacitor is presented across the cell terminals. In this example the first and second cell terminals 101 and 102 are connected to the negative and positive terminals respectively of the energy storage element. Note as used herein the terms positive and negative are used as relative terms and means more positive or more negative. In practice both positive and negative terminals of the energy storage device may be the same polarity with respect to ground.

In the second switch state, the first switch 104 is turned-off and the second switch 105 is turned-on. This state, will may be referred to as a bypass state, electrically connects the cell terminals 101 and 102 in a path that bypasses the capacitor 103.

In operation of the VSC, the various cells of the chain-link circuit may be selectively switched between the active state and the bypass state to provide a desired voltage waveform across the entire chain-link circuit as will be understood by one skilled in the art. During normal operation timing of the switching between the active and bypass state is controlled for each cell in accordance with the overall voltage order and also to maintain the voltage V_{SM} of the capacitor 103 of the cell or submodule at a desired level and balance the voltages across the various cells.

However, in some fault conditions, for example if a relatively large fault current develops through the valve, it may be advantageous to bypass the cell or submodule to avoid damage to the components of the cell. A bypass thyristor 106 is thus typically arranged between the cell terminals to allow a fault current to flow in a defined direction between the cell terminals, in this example from the first cell terminal 101 to the second cell terminals 102.. In the event that the relevant type of fault is detected a fault controller may generate a firing command to turn-on the bypass thyristor.

Additionally, in some operating conditions, for instance in certain fault scenarios, i.e. in response to a fault condition, it may be desirable to partially discharge the capacitor 103. It has thus been proposed to arrange a discharge module 107 in parallel with the capacitor 103, the discharge module 107 comprising a resistor 108 in series with a discharge IGBT switch 109. In normal operation the discharge IGBT is turned-off. However, in response to a control signal indicating that capacitor needs to be discharged, the discharge IGBT 109 is turned-on to create a short-circuit path via discharge resistor 108 from the positive terminal of the capacitor to the negative terminal. This will result in the capacitor discharging, relatively rapidly, via the discharge resistor 108. The discharge IGBT 109 may be turned-on until some criteria is met and then may be turned-off, thus maintaining the voltage of the capacitor 103 of the cell at a desired level or within a desired range.

Further, in some fault conditions a current may flow through the chain link circuit, i.e. a valve current, which flows in the opposite direction to that discussed above, i.e. in the opposite direction to that allowed by the bypass thyristor 106. In such a case, it can be advantageous to connect at least some of the capacitors 103 of the cells 100 of the chain-link circuit into series so as to provide a voltage to oppose the fault current. In this case however the valve current could cause the capacitor 103 of the cell 100 to overcharge to an unsafe level. The discharge module 107 in parallel with the capacitor 103 could, in such an event, be activated so as to divert the valve current away from the capacitor 103 to prevent over-charging.

This discharge arrangement works satisfactorily, but requires a dedicated IGBT 109 for the discharge module 107, with the associated cost and complexity of an IGBT, or similar semiconductor switch.

In embodiments of the present disclosure a discharge arrangement is provided that can operate when required, for instance to discharge the energy storage element, e.g. capacitor 103, of a cell or to provide a divert path for diverting current away from the energy storage element, e.g. capacitor 103, of a cell, but which does not require a dedicated IGBT or similar semiconductor switch.

Figure 2 illustrates one example of a cell according to an embodiment of the present disclosure in which similar components as described previously are identified with the same reference numerals. Figure 2 again shows a half-bridge cell with an energy storage element, in this example a capacitor 103, and first and second switches 104 and 105 for switching the cell to a first, active, state or a second, bypass, state. In this example a discharge module 201 is provided that comprises a first element 202 which can operate, when required, to provide at least a part of a conductive path in parallel with the capacitor 103, e.g. for discharging the capacitor 103 or diverting a charging current away from the capacitor 103. The first element 202 is a line-commutated switching element and, in this example, is a thyristor.

As will be understood by one skilled in the art a thyristor is a switching element that can operate in a non-conductive state, to prevent conduction (in forward or reverse directions), or a conductive state, to allow conduction in a forward direction. A thyristor, requires a suitable forward bias to be able to operate in the conducting state, but once operating in the conducting state will remain conducting as long as it remains suitably biased, i.e. as long as the voltage across the thyristor, i.e. the line voltage, remains above a certain threshold level. Thus the thyristor cannot be controllably turned-off independently of the electrical conditions of the line in which the thyristor is located. A thyristor is thus an example of a line-commutated switching element, where operation in the conductive state is commutated by the line-voltage. The line-commutated switching element may also be seen as a line-deactivated switching element or a line-extinguished switching element.

In some implementations the thyristor may be configured as a selectively triggerable switching element, i.e. the thyristor may, at a time when it is suitably biased, be selectively triggered to transition to the conducting state, i.e. to turn on, by a suitable external trigger control. In some examples the thyristor could be triggered by a suitable electrical signal, such as an electrical firing signal. In some instances the thyristor may comprise a light triggered thyristor, as will be understood by one skilled in the art, which could be commanded by light signals from some controller at the local level of the cell or from ground level.

In some implementations however the thyristor may be configured as an line-activated switching element that automatically enters the conductive state at a certain defined turn-on threshold. For instance a thyristor could be arranged, for example together with a suitable break-over diode, so as to automatically transition to the conducting state if the voltage across its terminals exceeds the turn-on threshold voltage, and thus the thyristor may be a switching element where the conductive state is both line-activated and line-commutated.

A thyristor is generally a simpler and less expensive component than an IGBT, but one skilled in the art would not previously have considered a thyristor as a suitable element for a discharge module.

Referring back to figure 1, were the discharge IGBT 109 of the discharge module 107 to be replaced with a thyristor, then in the event that discharge is required, the thyristor could be triggered to be conductive to establish the short-circuit path. However, once triggered the thyristor would remain on and conductive until the capacitor 103 was substantially completely discharged. A controlled partial discharge would not be possible. In addition, this operation would result in a sustained, relatively high, current through the resistor 108 and thyristor, which would likely result in overheating and damage of the resistor. Hence the conventional discharge arrangement includes a semiconductor switch, such as an IGBT, that can be controllably turned-off, to stop discharge, before the capacitor 103 is substantially fully discharged.

In the embodiment of figure 2 the discharge module comprises a selectively triggerable thyristor 202 in series with a resistance 203. The discharge module is connected in series between the cell terminals 101 and 102 and, in the conductive state, allows conduction from the second cell terminal 102 to the first cell terminal 101. In use, if discharge of the capacitor 103 is required, the thyristor 202, in this example, is turned-on by a suitable control signal S_{D}, e.g. firing command, and the first and second switches 104 and 105 are controlled to the first switch state, i.e. the active state. As explained previously, in the first switch state the capacitor 103 is connected in series between the cell terminals, with the positive terminal connected (in this example via switch 104) to the second cell terminal 102. The thyristor 202 is thus turned-on to provide a short-circuit path between the cell terminals for discharging the capacitor 103 via resistance 203. Discharge can then be stopped by switching the first and second switches 104 and 105 to the second switch state, i.e. the bypass state. This bypasses the capacitor 103 and results in the first and second cell terminals 101 and 102 reaching substantially the same voltage. The discharge thyristor 202 will thus cease to be forward biased and will turn off.

Likewise, if a fault occurs that results in a reverse fault current flowing in the chain-link circuit, it may be desirable to connect the capacitor 103 in series in the chain link circuit, i.e. to operate the cell 200 in the active state, to oppose the fault current. In this case the fault current could lead to over-charging of the capacitor 103. With the cell in the active state, the thyristor 202 may be turned-on by a suitable control signal S_{D} as discussed above so as to establish a divert path between the cell terminals 102 and 102 for diverting current away from the capacitor 103. Again, when conduction via the discharge module 201 is no longer required, then conduction via the discharge module 201 can be stopped by switching the first and second switches 104 and 105 to the second switch state, i.e. the bypass state, as discussed above.

Using a line-commutated switching element, e.g. thyristor 202, rather than an IGBT or the like, as the switching component of the discharge module 201 can allow the discharge module, and hence the cell or submodule 200, to be simpler and/or cheaper and may provide greater reliability than with a discharge module implemented using an IGBT or the like. However, the use of a line-commutated switching element such as a thyristor does not, on its own, allow for a controlled turn-off of the discharge module. In the embodiment of figure 2 the ability for a controlled turn-off is achieved by locating the discharge module 201 in series between the cell terminals 101 and 102, rather than directly in parallel with the capacitor 103, and by using the main submodule switches, i.e. the first and second switches 104 and 105 of the cell or submodule, as part of the control of the discharge module. This provides a discharge arrangement that can be controllably activated and commutated as desired, but without requiring any additional semiconductor switches such as IGBTs that can be turned-off independently.

Embodiments thus relate to a cell having a discharge module that does not include a dedicated semiconductor switch, such as an IGBT which can be controllably turned-on and off. The first switch 104, which connects the discharge module in parallel with the energy storage element capacitor 103 when the discharge module 201 is conductive is one of the main semiconductor switches of the cell which is also used in normal operation, in this example to establish an active state of the cell. Likewise the second switch 105 which is used to stop conduction of the discharge module is one of the main semiconductor switches of the cell which is also used in normal operation, in this example to establish a bypass state of the cell.

A controller 204 may thus be arranged to generate suitable control signals for controlling conduction via the discharge module, which may include a firing signal S_{D} for the discharge thyristor 202 and respective switch control signals S₁ and S₂ for the first and second switches. The controller 204 may be responsive to a fault condition, for instance a fault control signal, FCon, which may indicate at least one of when to initiate conduction via the discharge module and when to stop or shut-down conduction.

For example, in use, if the cell is in the first switch state and the voltage V_{SM} of the capacitor of the cell 200 increases to a level to indicate that discharge is required, the controller 204 may, in response to a fault control signal, generate a control signal S_{D} to command the thyristor 202 to be turned-on. Whilst figure 2 illustrates that the controller 204 receives the fault control signal, this could be from some part of a general cell control arrangement.

When the thyristor 202 needs to be turned-off, which again may be indicated by the fault control signal, FCon, the controller generates a control signal S₁ to turn-off the first switch 104 and then turns on the second switch 105 via control signal S₂. To ensure the thyristor 202 is fully off the controller 204 may maintain the second switch state for a defined minimum period, say of the order of a few hundred microseconds in some implementations.

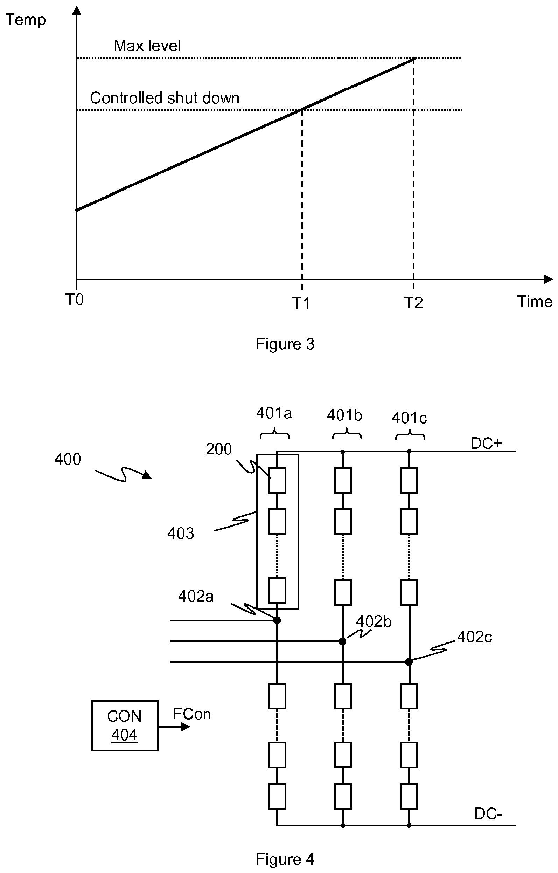

If the thyristor 202 of the discharge module 201 is turned-on, the controller 204 may be configured to turn it off after a certain period so as to avoid overheating, e.g. based on a thermal model of the cell or components thereof, for example a thermal model of the resistor 203 of the discharge module 201. For example, figure 3 illustrates, for an example thyristor, that the thyristor is turned on at a time T0. Current starts flowing through the thyristor and the temperature of the thyristor increases (shown as linear increase in figure 3 but in some instances the rate of increase in temperature with time may be non-linear). At time T1, a turn-off request is generated taking into account the time required to turn-off the thyristor. The request could be generated based on a monitored or modelled temperature against a turn-off threshold as indicated. At time T2 the thyristor is turned-off. It will be understood by one skilled in the art however that other arrangement for controlling the turn-off of the thyristor could additionally or alternatively be implemented, for instance based on other monitored or modelled parameters such as submodule voltage or current or the temperature of other cell components.

The controller 204 may be implemented at least partly as part of the cell 200, although in some implementations at least part of the controller may be implemented as part of the higher level control of the VSC, for instance as part of the valve base electronics (VBE) for controlling a valve of the VSC.

Figure 4 illustrates one example of a VSC 400. The VSC 400 in this example has three phase limbs, 401a, 401b and 401c. Each phase limb has two converter arms connecting respective DC terminals DC+ and DC- to a respective AC node 402a-c for that phase limb. In this example each converter arm comprises a chain-link circuit 403 of a plurality of series connected cells 200 according to embodiments of the disclosure. The example illustrated in figure 4 is thus an MMC (multilevel modular converter), although other VSC topologies, such as an alternate arm converter (AAC), Series Bridge Converter (SBC) or controlled transition bridge (CTB) may be implemented using chain-link circuits having cells according to the embodiments described herein.

A chain-link controller 404 may control switching of the cells of a chain-link circuit 403. The chain-link controller may control switching of the cells 200 to provide a desired waveform for operation of the VSC 400 and, as mentioned above, may also provide voltage balancing between the various cells of the chain-link circuit.

In the some instances currents flowing through the chain-link circuit could cause the voltage or one or more of the cells to increase in an undesired way and the controller 404 may thus be configured to initiate activation of the discharge module 201 of each of the relevant cells in the manner as discussed above. Also, to mitigate the fault, it is advantageous to keep the chain-link cells opposing the voltage for at least part of the duration of the fault, without the fault current causing a rise of the capacitor voltage that exceeds safe working levels. If a safe working level is exceeded in a cell, the cell terminals are shorted together, causing a potential collapse of the valve voltage, which could, in turn, create even larger fault currents.

One possible issue with this approach is that, as mentioned above, once the discharge module 201 of a cell 200 is activated, the controlled shut-down, required to prevent thermal overload, involves switching the cell to the bypass state. In the bypass state the capacitor of the cell 200 is obviously bypassed and thus that cell is no longer contributing to the voltage across the whole chain-link circuit. Were a significant number of cells 200 to all be switched to the bypass state at substantially the same time, as part of the controlled shut-down of their discharge modules, this could potentially cause the valve voltage, i.e. the voltage across the chain-link circuit, to collapse in an undesired manner.

To avoid this issue the VSC may be configured so as to avoid a controlled shut-down of a significant number of cells at the same time. The shut-down or deactivation of the discharge modules 201 of the cells 200 may thus be implemented in a sequenced or staggered fashion, e.g. following a feathering strategy. In some embodiments the chain-link controller 404 may be configured to issue commands to the various cells to initiate a controlled shut-down and may issues such commands to different groups of cells at different times. Additionally or alternatively a cell controller 204 could be configured to receive a shut-down command from a valve controller 404 and apply a certain delay before implementing the command, wherein different groups of cells are configured to apply different delays to one another. This may involve the discharge modules of at least some cells being turned-off early than necessary for purely thermal protection, i.e. before the maximum thermal limit is reached. The amount of delay or staggering between the various groups can be chosen to ensure that there is always a sufficient number of cells available in the active state to support the required voltage to a sufficient extent.

Referring back to figure 2, the discharge module 201 of embodiments of the present disclosure comprises a thyristor 202 in series between the cell terminals 101 and 102 and arranged to provide a discharge path when the cell is in the active state. It will be appreciated from figure 1 that the conventional cell 100 may include a bypass thyristor 106 connected in series between the cell terminals 101 and 102. It will be appreciated however that the bypass thyristor 106 is arranged to provide a bypass path for a fault current that is in the opposite direction to that which would be required for discharge of the capacitor 103, or for diverting a charging current from the capacitor 103.

The discharge module of figure 2 comprises a resistance 203 in series with the line-commutated switching element, e.g. thyristor 202 of the discharge module. The resistance may be a suitable resistor or series of resistors, but in some embodiments the resistance may comprise a surge arrestor or a varistor, such as a metal oxide varistor (MOV). MOVs, as will be understood by one skilled in the art, typically comprise a bulk semiconductor material, for example compressed zinc oxide powder, that presents a high resistive value when a voltage below the voltage rating of the MOV is applied, but a low resistive value when the applied voltage rises above a certain level, i.e. the let-through voltage. Thus, if the voltage level rises above the let-through voltage level, the MOV effectively short circuits to provide a conductive current path. The MOV recovers to a high resistive value by its own means when the applied voltage subsequently reduces below the let-through voltage level.

Implementing resistance 203 as an MOV in series with the thyristor 202 as part of the discharge module 201 may allow the discharge module to automatically turn-off once the voltage across the discharge module drops below the let-through voltage level of the MOV. In use, the MOV may be arranged to have a let-through voltage, or protective level, at an appropriate level above the normal operating range of the cell capacitor 103, beyond which it would be wished to activate the discharge module. In use if the voltage V_{SM} of the capacitor 103 increase beyond this level, the MOV will become conductive. However the discharge module 201 may only be activated and start conducting when the thyristor 202 is triggered-on. Once the discharge module 201 is conducting, the voltage may start reducing. If the voltage drops below the protective level, the MOV will cease conducting, and the thyristor 202 will thus cease to be forward biased and will turn-off, providing an automatic shut-down once the voltage has dropped to an acceptable level. If shut-down of the discharge module is desired before the voltage has dropped to the protective level, the thyristor 202 may be controllably turned-off in the same way as discussed above, by switching the cell to the bypass state. In this case the presence of the MOV may interrupt the thyristor current faster than would be the case without use of an MOV, and thus may reduce the amount of time that need be spent in the bypass state in order to ensure the thyristor 202 is fully off.

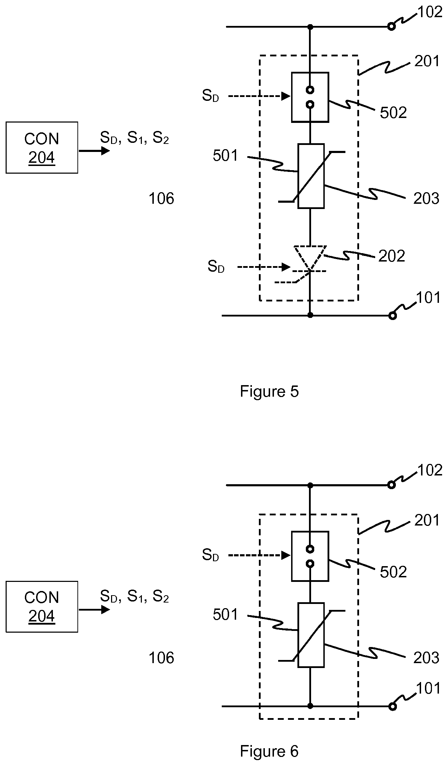

In some embodiments the MOV could be arranged in series with a surge protection device (SPD), such as a gas discharge tube (GDT) for example. Figure 5 illustrates an example of a discharge module 201 connected between the cell terminals 101 and 102 as discussed previously. In this example a MOV 501 is provided as resistance 203 and the MOV 501 is in series with an SPD 502, for example a GDT.

As will be understood by one skilled in the art a GDT typically comprises two electrodes spaced apart from one another, and separated by a gas at a certain pressure. The electrodes and gas are housed in suitable housing such as a ceramic enclosure. The GDT will be open-circuit and non-conductive unless the voltage between the electrodes reaches a spark-over voltage and gas discharge, e.g. arcing occurs. Once gas discharge starts it can be maintained at a lower voltage in an arcing or glow regime.

The combination of an MOV 501 and SPD 502 may provide faster turn-off.

Whilst a GDT 502 may be advantageously used in some embodiments, other elements could be used to provide similar performance to a GDT. For example a break-over-diode, which automatically conducts if the diode becomes biased above a defined break-over voltage could be used in series with the MOV 501.

In some embodiments the SPD 502 itself may be selectively triggerable. Various types of triggerable SPD are known. For example as mentioned the SPD 501 may be a GDT. Various types of triggerable GDT are known, for instance the GDT 301 may comprise a third electrode that in response to a suitable trigger signal S_{D} acts to reduce the spark-over voltage. For instance the third electrode may at least partly surrounds the gas and acts to at least partly ionise the gas when triggered. A suitable trigger signal can thus trigger the spark gap and allow gas discharge to start and large currents to flow below the nominal spark over voltage.

In such a case the SPD 502 may for example be a GDT with a high spark over voltage and thus would not normally become conductive unless this high voltage is reached. However the SPD 501 could be triggered at a lower, voltage, above the let-through voltage of the MOV 501, by a suitable trigger signal. In such a case the thyristor 202 may not be necessary as a switching element and could be omitted. The discharge module 201 could be controllably activated by triggering the SPD 502. Figure 6 illustrates an example with an SPD 502, in this case a GDT, in series with an MOV, but without a thyristor. In this example the GDT 502 is the element of the discharge module 201 that is a line-commutated switching element.

In this case, if the voltage V_{SM} of the capacitor 103 were rise above the normal operating voltage and exceed the MOV let through voltage, the discharge module 201 could be activated at any time by triggering the SPD 502. However the discharge module 201 would not automatically become conductive unless the voltage increased to greater than the spark-over voltage for the untriggered GDT. Once triggered the discharge module would remain conductive until the voltage across the discharge module 201 dropped below the let-through voltage of the MOV. This could occur automatically if the voltage of the capacitor 103 discharges sufficiently or could be the result of a controlled shut-down by switching the cell to the bypass state.

In some embodiments therefore the discharge module may not comprise a thyristor, but may comprise some other line-commutated element, but which is not a semiconductor switch that can be controllably turned-on and turned-off, i.e. which can be turned-on or -off independently of the line conditions.

The discussion above has mainly focussed on the use of a selectively triggerable switching element as the line-commutated element, for example a thyristor which can be selectively triggered or SPD such as GDT that can be controllably triggered. In some instances however the line-commutated switching element may be configured so as automatically activate, i.e. enter the conductive state, if a voltage above of a turn-on threshold is applied across the element. Thus the line-commutated switching element may also be operable to be line-activated.

For example, referring back to figure 2, the thyristor 202 could be a thyristor with a built-in break over diode. For example some commercially available light triggered thyristors included break-over diodes. If such a light triggered thyristors with a break-over diode were left uncommanded, the thyristor apparatus would act as an automatic line activated switching element and would switch to the conductive state if the relevant break-over voltage threshold were reached and then continue to conduct as long as it remains suitable biased. Alternatively a break-over diode on its own could be used as the switching element, and arranged in series with an MOV as described above. Alternatively, referring to figure 6 an SPD 502, such as a GDT which is not configured to be selectively triggerable could be arranged as the switching element.

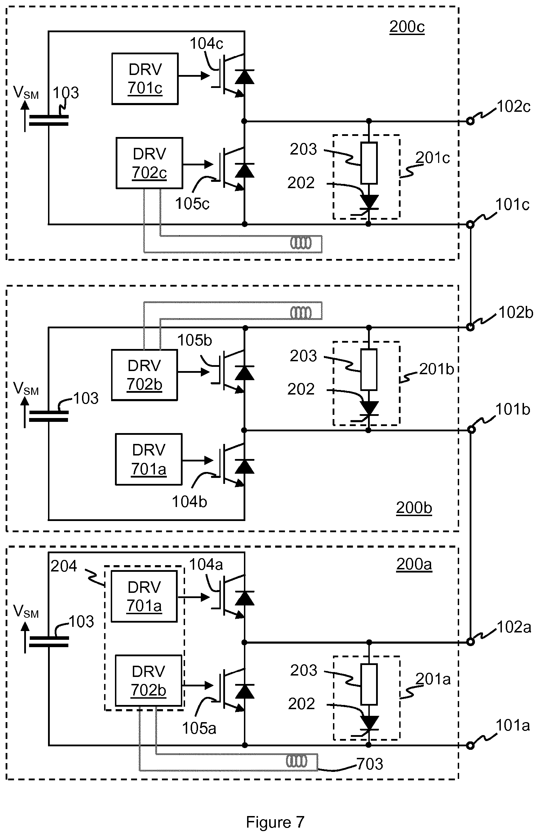

Figure 7 illustrates an example of a plurality of cells 200 in series, each cell having an energy storage element 103 and respective cell first and second switches 104 and 105. In this example at least some cells have different arrangements from one another. For instance in cell 200a, the negative terminal of the capacitor 103 is directly coupled to the first cell terminal 101a and the positive terminal of the capacitor 103 is selectively connected to the second cell terminal 102a via cell first switch 104a, which is on in the active state. In cell 200b however the positive terminal of the capacitor 103 is directly coupled to the second cell terminal 102b and the negative terminal of the capacitor 103 is selectively connected to the first cell terminal 101b via cell first switch 104b which is on in the active state. In either case however a discharge module 201 is connected between the cell terminals. In this example successive series connected cells have the opposite arrangement from one another. It will be understood that this is just one possible arrangement however.

In the example of figure 7 the discharge module 201 of each cell comprises a thyristor 202, which may be a selectively triggerable thyristor or a switching element that will automatically become conductive if a threshold voltage across the switching element is exceeded.

Figure 7 also shows that a cell controller 204 may comprise switch drivers 701 and 702 for driving the first and second cell switches 104 and 105 respectively. The controller 204 may be coupled to a sensor 703 for determining electrical properties of the discharge module 201 when conducting, for example to determine when to switch the cell 200 to the bypass state to shut down conduction of the discharge module 201 to prevent thermal overload. A sensor 703 may be particularly advantageous for implementations where the discharge module 201 is configured so as to automatically become conductive based on the line voltage or current, for instance to detect when conduction through the discharge module 201 begins for thermal modelling. In other implementations however it would be possible to deduce that conduction via the discharge module has started by monitoring the DC voltage of the energy storage element, e.g. capacitor, of the cell.

In general therefore embodiments relate to a cell for a VSC, in particular as a cell for part of a chin-link circuit of a VSC. The cell comprises an energy storage element. The embodiments discussed above have illustrated the energy storage element as a single capacitor, but in some implementation the energy storage element may comprise multiple capacitors and/or other energy storage elements such as batteries or the like could be used in some implementation. A discharge module is electrically connected in series between the cell terminals and is operable to provide a conductive path between the cell terminals so as to discharge the energy storage element/prevent overcharging. The discharge module comprises a line-commutated switching element. In some embodiments the line-commutated switching element comprises a thyristor. In use when discharge is required the line-commutated switching element, e.g. thyristor, may be configured to operate in the conductive state, with the cell in an active state with energy storage element electrically connected in series between the cell terminals. The line-commutated switching element, e.g. thyristor, may be operable to be selectively triggered to be conductive when required or may be arranged to automatically conduct if the voltage across the discharge module exceeds a threshold. To provide a controlled end to discharge the cell may be switched to a bypass state.

Embodiments have been described with reference to a cell with first and second switches in a half-bridge configuration in some embodiments the cell could be implemented as a full-bridge cell. Embodiments have been discussed above with reference to IGBTs as the cell switches, but in some embodiments at least one of the cell switches could be implemented as an IGCT (integrated gate commutated transistor).

Embodiments relate to a cell for use in a VSC, a module formed from a number of such cells or a chain-link circuit comprising a plurality of such cells in series. Embodiments also relate to a VSC comprising such cells, and in particular an MMC, AAC or CTB type VSC. The cells may in particular be used as part of a VSC for HVDC applications.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality. Any reference signs in the claims shall not be construed so as to limit their scope.

## Claims

1. A cell (200) for a voltage source converter (400) comprising:
first and second cell terminals (101, 102);
an energy storage element (103) and first and second switches (104, 105) configured such that:
in a first switch state the energy storage element is electrically connected between the first and second cell terminals, with a negative terminal of the energy storage element connected to the first cell terminal and a positive terminal of the energy storage element connected to the second cell terminal; and
in a second switch state the first and second cell terminals are electrically connected in a path that bypasses the energy storage element; and
a discharge module (201) connected between the first and second cell terminals, the discharge module comprising a first element (202) that can operate in a non-conductive state and also a conductive state to allow electrical conduction from the second cell terminal to the first cell terminal, wherein the first element (202) is a line-commutated switching element configured to transition from the conductive state to the non-conductive state if a current or voltage through or across the first element drops below a threshold;
a controller (204) configured to, in response to a fault condition, control the first and second switches to be in the first switch state with the first element (202) in the conductive state ;
**characterized in that** the controller is further operable to switch the first and second switches (104, 105) to the second switch state to shut-down conduction via the discharge module.

2. The cell of claim 1, wherein the first element comprises a selectively triggerable switching element that can be selectively triggered to transition from the non-conductive state to the conductive state and wherein the controller is configured to trigger the selectively triggerable switching element to transition to the conductive state in response to said fault condition.

3. The cell of claim 1, wherein the first element comprises a line-commutated switching element that is configured to automatically transition from the non-conductive state to the conductive state if a voltage across the discharge module exceeds a turn-on threshold.

4. The cell of any preceding claim, wherein the first element comprises a thyristor (202).

5. The cell of any preceding claim, wherein the first element comprises a surge protective device (502).

6. The cell of any preceding claim wherein the controller (204) is configured to maintain the first and second switches (104, 105) in the second switch state for at least a predetermined minimum duration to shut-down conduction via the discharge module before switching back to the first switch state.

7. The cell of any preceding claim wherein the controller (204) is configured to implement a controlled shut-down delay between receipt of a discharge shut-down signal and initiating switching to the second switch state, wherein the controlled delay is configured to be different to a shut-down delay applied by another cell.

8. The cell of any preceding claim, further comprising a resistive element (203) in series with the first element.

9. The cell of claim 8, wherein the resistive element is a resistor.

10. The cell of claim 8, wherein the resistive element is at least one of a surge arrestor and a varistor (501) configured to substantially allow conduction above a let-through voltage level and substantially block conduction below a let-through voltage level.

11. The cell of claim 10 wherein the resistive element comprises a metal oxide varistor.

12. A chain-link circuit (401) comprising a plurality of cells (200) in series, each cell being a cell according to any preceding claim.

13. The chain-link circuit of claim 12, comprising a chain-link controller (404) configured to control operation of the cells, wherein the chain-link controller is configured such that, if the discharge modules of a plurality of cells are all activated, the chain-link controller controls the cells so as to stagger the times at which different cells switch to the second switch state so as to shut-down conduction via the discharge module.

14. A voltage source converter comprising the cell of any of claims 1 to 11 or the chain-link circuit of claim 12 or claim 13.

15. A method of controlling voltage of a cell of a voltage source converter according to claim 1, wherein the method comprises:
in response to receiving signal fault condition, controlling the cell to be in the first switch state with the first element in the conductive state so as to allow conduction via discharge module; and
subsequently switching the first and second switches (104, 105) to the second switch state to shut-down conduction via the discharge module.

## Patentansprüche

1. Zelle (200) für einen Spannungsquellenwandler (400) umfassend:
einen ersten und einen zweiten Zellenanschluss (101, 102);
ein Energiespeicherelement (103) und erste und zweite Schalter (104, 105), die so konfiguriert sind, dass:
in einem ersten Schaltzustand das Energiespeicherelement elektrisch zwischen dem ersten und dem zweiten Zellenanschluss verbunden ist, wobei ein negativer Anschluss des Energiespeicherelements mit dem ersten Zellenanschluss und ein positiver Anschluss des Energiespeicherelements mit dem zweiten Zellenanschluss verbunden ist; und
in einem zweiten Schaltzustand der erste und der zweite Zellenanschluss elektrisch in einem Pfad verbunden sind, der das Energiespeicherelement umgeht; und
ein Entladungsmodul (201), das zwischen den ersten und den zweiten Zellenanschluss geschaltet ist, wobei das Entladungsmodul ein erstes Element (202) umfasst, das in einem nicht-leitenden Zustand und auch in einem leitenden Zustand arbeiten kann, um eine elektrische Leitung von dem zweiten Zellenanschluss zu dem ersten Zellenanschluss zu ermöglichen, wobei das erste Element (202) ein leitungskommutiertes Schaltelement ist, das so konfiguriert ist, dass es von dem leitenden Zustand in den nicht-leitenden Zustand übergeht, wenn ein Strom oder eine Spannung durch oder an dem ersten Element unter einen Schwellenwert fällt;
eine Steuerung (204), die so konfiguriert ist, dass sie als Reaktion auf eine Fehlerbedingung den ersten und den zweiten Schalter so steuert, dass sie sich in dem ersten Schaltzustand befinden, wobei sich das erste Element (202) in dem leitenden Zustand befindet; **dadurch gekennzeichnet, dass**
die Steuerung ferner betreibbar ist, um den ersten und den zweiten Schalter (104, 105) in den zweiten Schaltzustand zu schalten, um die Leitung über das Entladungsmodul abzuschalten.

2. Zelle nach Anspruch 1, wobei das erste Element ein selektiv auslösbares Schaltelement umfasst, das selektiv ausgelöst werden kann, um vom nicht-leitenden Zustand in den leitenden Zustand überzugehen, und wobei die Steuerung so konfiguriert ist, dass
sie als Reaktion auf den Fehlerzustand das selektiv auslösbare Schaltelement auslöst, um in den leitenden Zustand überzugehen.

3. Zelle nach Anspruch 1, wobei das erste Element ein leitungskommutiertes Schaltelement umfasst, das so konfiguriert ist, dass es automatisch vom nicht-leitenden Zustand in den leitenden Zustand übergeht, wenn eine Spannung an dem Entladungsmodul einen Einschaltschwellenwert überschreitet.

4. Zelle nach einem der vorstehenden Ansprüche, wobei das erste Element einen Thyristor (202) umfasst.

5. Zelle nach einem der vorstehenden Ansprüche, wobei das erste Element eine Überspannungsschutzvorrichtung (502) umfasst.

6. Zelle nach einem der vorstehenden Ansprüche, wobei die Steuerung (204) so konfiguriert ist, dass sie den ersten und den zweiten Schalter (104, 105) für mindestens eine vorbestimmte Mindestdauer in dem zweiten Schaltzustand hält, um die Leitung über das Entladungsmodul abzuschalten, bevor sie in den ersten Schaltzustand zurückschaltet.

7. Zelle nach einem der vorstehenden Ansprüche, wobei die Steuerung (204) so konfiguriert ist, dass sie eine gesteuerte Abschaltverzögerung zwischen dem Empfang eines Entladungsabschaltsignals und dem Einleiten des Umschaltens in den zweiten Schaltzustand implementiert, wobei die gesteuerte Verzögerung so konfiguriert ist, dass sie sich von einer Abschaltverzögerung unterscheidet, die von einer anderen Zelle angewendet wird.

8. Zelle nach einem der vorstehenden Ansprüche, weiter umfassend ein Widerstandselement (203) in Reihe mit dem ersten Element.

9. Zelle nach Anspruch 8, wobei das Widerstandselement ein Widerstand ist.

10. Zelle nach Anspruch 8, wobei das Widerstandselement mindestens einer von einem Überspannungsableiter und einem Varistor (501) ist, der so konfiguriert ist, dass er eine Leitung oberhalb eines Durchlassspannungspegels im Wesentlichen zulässt und eine Leitung unterhalb eines Durchlassspannungspegels im Wesentlichen blockiert.

11. Zelle nach Anspruch 10, wobei das Widerstandselement einen Metalloxidvaristor umfasst.

12. Verkettungsschaltung (401) mit einer Vielzahl von Zellen (200) in Reihe, wobei jede Zelle eine Zelle nach einem der vorstehenden Ansprüche ist.

13. Verkettungsschaltung nach Anspruch 12, umfassend eine Verkettungssteuerung (404), die so konfiguriert ist, dass sie den Betrieb der Zellen steuert, wobei die Verkettungssteuerung so konfiguriert ist, dass, wenn die Entladungsmodule einer Vielzahl von Zellen alle aktiviert sind, die Verkettungssteuerung die Zellen so steuert, dass die Zeiten, zu denen verschiedene Zellen in den zweiten Schaltzustand umschalten, gestaffelt werden, um die Leitung über das Entladungsmodul abzuschalten.

14. Spannungsquellenwandler, umfassend die Zelle nach einem der Ansprüche 1 bis 11 oder die Verkettungsschaltung nach Anspruch 12 oder Anspruch 13.

15. Verfahren zum Steuern der Spannung einer Zelle eines Spannungsquellenwandlers nach Anspruch 1, wobei das Verfahren umfasst:
als Reaktion auf den Empfang einer Signalfehlerbedingung, Steuern der Zelle, so dass sie sich im ersten Schaltzustand befindet, wobei sich das erste Element im leitenden Zustand befindet,
um eine Leitung über das Entladungsmodul zu ermöglichen; und
anschließendes Umschalten des ersten und zweiten Schalters (104, 105) in den zweiten Schaltzustand, um die Leitung über das Entladungsmodul abzuschalten.

## Revendications

1. Cellule (200) pour un convertisseur de source de tension (400) comprenant :
des première et seconde bornes de cellule (101, 102) ;
un élément de stockage d'énergie (103) et des premier et second commutateurs (104, 105) configurés de telle sorte que :
dans un premier état de commutateur, l'élément de stockage d'énergie est connecté électriquement entre les première et seconde bornes de cellule, avec une borne négative de l'élément de stockage d'énergie connectée à la première borne de cellule et une borne positive de l'élément de stockage d'énergie connectée à la seconde borne de cellule ; et
dans un second état de commutateur, les première et seconde bornes sont connectées électriquement dans un trajet qui contourne l'élément de stockage d'énergie ; et
un module de décharge (201) connecté entre les première et seconde bornes de cellule, le module de décharge comprenant un premier élément (202) qui peut fonctionner dans un état non conducteur et également un état conducteur pour permettre une conduction électrique de la seconde borne de cellule à la première borne de cellule, dans laquelle le premier élément (202) est un élément de commutation commuté en ligne configuré pour passer de l'état conducteur à l'état non conducteur si un courant ou une tension à travers le premier élément ou aux bornes de celui-ci chute en dessous d'un seuil ;
un dispositif de commande (204) configuré, en réponse à une condition de défaillance, pour commander aux premier et second commutateurs d'être dans le premier état de commutateur avec le premier élément (202) dans l'état conducteur ; **caractérisée en ce que**
le dispositif de commande permet en outre de commuter les premier et second commutateurs (104, 105) vers le second état de commutateur pour arrêter la conduction via le module de décharge.

2. Cellule selon la revendication 1, dans laquelle le premier élément comprend un élément de commutation déclenchable sélectivement qui peut être déclenché sélectivement pour passer de l'état non conducteur à l'état conducteur et dans lequel le dispositif de commande est configuré pour déclencher
l'élément de commmutation déclenchable sélectivement pour qu'il passe à l'état conducteur en réponse à ladite condition de défaillance.

3. Cellule selon la revendication 1, dans laquelle le premier élément comprend un élément de commutation commuté par réseau qui est configuré pour passer automatiquement de l'état non conducteur à l'état conducteur si une tension aux bornes du module de décharge dépasse un seuil d'activation.

4. Cellule selon l'une quelconque des revendications précédentes, dans laquelle le premier élément comprend un thyristor (202).

5. Cellule selon l'une quelconque des revendications précédentes, dans laquelle le premier élément comprend un dispositif de protection contre les surtensions (502).

6. Cellule selon l'une quelconque des revendications précédentes, dans laquelle le dispositif de commande (204) est configuré pour maintenir les premier et second commutateurs (104, 105) dans le second état de commutateur pendant au moins une durée minimale prédéterminée pour arrêter la conduction via le module de décharge avant retour au premier état de commutation.

7. Cellule selon l'une quelconque des revendications précédentes, dans laquelle le dispositif de commande (204) est configuré pour mettre en oeuvre un retard d'arrêt commandé entre la réception d'un signal d'arrêt de décharge et l'amorce de la commutation vers le second état de commutateur, dans laquelle le retard commandé est configuré pour être différent d'un retard d'arrêt par une autre cellule.

8. Cellule selon l'une quelconque des revendications précédentes, comprenant en outre un élément résistif (203) en série avec le premier élément.

9. Cellule selon la revendication 8, dans laquelle l'élément résistif est une résistance.

10. Cellule selon la revendication 8, dans laquelle l'élément résistif est au moins un d'un protecteur de surtension et d'une varistance (501) configuré pour permettre sensiblement une conduction au-dessus d'un niveau de tension autorisée à passer et bloquer sensiblement une conduction en dessous d'un seuil de tension autorisée à passer.

11. Cellule selon la revendication 10, dans laquelle l'élément résistif comprend une varistance à oxyde métallique.

12. Circuit de liaison en chaîne (401) comprenant une pluralité de cellules (200) en série, chaque cellule étant une cellule selon l'une quelconque des revendications précédentes.

13. Circuit de liaison en chaîne selon la revendication 12, comprenant un dispositif de commande de liaison en chaîne (404) configuré pour commander un fonctionnement des cellules, dans lequel le dispositif de commande de liaison en chaîne est configuré de telle sorte que, si les modules de décharge d'une pluralité de cellules sont tous activés, le dispositif de commande de liaison en chaîne commande les cellules de sorte à étaler les moments auxquels différentes cellules commutent vers le second état de commutateur de sorte à arrêter la conduction via le module de décharge.

14. Convertisseur de source de tension comprenant la cellule selon l'une quelconque des revendications 1 à 11 ou le circuit de liaison en chaîne selon la revendication 12 ou la revendication 13.

15. Procédé de commande de tension d'une cellule d'un convertisseur de source de tension selon la revendication 1, dans lequel le procédé comprend :
en réponse à la réception d'une condition de défaillance de signal, le fait de commander à la cellule d'être dans le premier état de commutateur avec le premier élément dans l'état conducteur de sorte à permettre
une conduction via le module de décharge ; et
la commutation consécutive des premier et second commutateurs (104, 105) vers le second état de commutateur pour arrêter la conduction via le module de décharge.
